# EUROPEAN PATENT APPLICATION

(11) **EP 1 550 969 A2**
(43) Date of publication of application: **06.07.2005**
(21) Application number: 04105693.8
(22) Date of filing: 11.11.2004
(51) Int. Cl.: G06F 17/60

(54) **Method and system for dynamically and automatically set-up offerings for IT-services**

(30) Priority: 11.12.2003 EP 03104647
(71) Applicant: International Business Machines Corporation, Armonk, N.Y. 10504 (US)
(72) Inventor: Schmidt, Andrea, 71034 Boeblingen (DE); Daur, Harald, 73728 Esslingen (DE); Illgner-Kurz, Monika, 71083 Herrenberg (DE)
(74) Representative: Klein, Hans-Jörg

(57) **Abstract**

The inventive Offering Creation and Validation Component identifies all available resource types contained in the resource catalogue, generates a "GET TIME TABLE" resource management action 19 for each of those resource types, and finally receives a time table 20 containing all resource types with their assigned resources and their assigned free, reserved, and used time slots.

By using that time - table, the OCAV generates a new time - table including all resource types with their assigned resources having a common free time slots. Then, the OCAV component generates a "GET COST" resource management action for each resource type in that new time - table, and assigns the calculated costs to the respective resource types resulting in a final time table.

In further step, the OCAV 26 generates a "mapping" resource management action which maps the free resource included in that final time - table to pre - defined service environments described in the resource catalogue, and if the mapping has been successful, creates a list including all pre - defined service environments including their free time slots and costs. Finally, the OCAV generates an offering for each of those SEs, assigns a price to each Offering which is preferably calculated by certain business rules, and publishes it, preferably in a registry.

## Description

### Field of the invention

The subject of present invention relates to provide IT - Services to customers in general, and in particular how to dynamically and automatically set up offerings for IT - Services in order to optimize the rate of utilization of the service provider's existing resource infrastructure.

### Background of the invention

In the traditional outsourcing business the customers who want to concentrate on their core business hand over their IT - business or at least parts of it to service providers who run the IT - business for several customers. For each IT - business the service provider has to define a service environment. The term service environment as used in the present patent application defines all resources needed for a certain IT - Service to be provided to a customer, how to manage those resources in order to fulfill the conditions of the IT - Service, how to handle situations like resource shortages or resource over-provisioning, and the appropriate assigned resource management actions like configuring or installing of said resources. Each IT - component within said service environment represents a so-called resource. For example a resource may be hardware (e.g. server), software (application programs), network with certain channel capabilities, disks etc. In normal situations a lot of resources within the existing resource infrastructure are not used, however they cannot be provided to other customers.

In order to achieve a greater rate of utilization of the service Provider's infrastructure it would be advantageous to create additional offerings in advance by identifying and using all free resources of the service providers infrastructure independently whether or not they are already assigned to a service environment.

The present patent application describes a method and system which dynamically set up offerings for IT - Service by the service provider in order to optimize the rate of utilization of the service provider's existing resource infrastructure.

### State of the Art

Offering an IT-Service encompasses the provisioning of that IT-Service on certain business conditions for an either mid - or long term range. Normally, an IT-service will be specifically created and offered for a specific customer based on an IT-Service agreement.

Based on that offerings, the Service Provider has to build up the required Service Environment (SE) to fulfill the offered IT - Services.

In the State of the Art systems, the mapping of the offered IT - Service to the required Service Environment is either a static lookup of the corresponding resource management actions or a manual time consuming creation of them. The first method is applicable for static environments, i.e. each ODS gets exactly the same SE. In case of parameterized offerings, the corresponding resource management actions have to be defined and or adopted manually which is a complex and therefore error prone process. Typically the resource management actions are described by documentation, if at all, which lists the operator's tasks to be done in order to create and operate the customer's service environment. Some steps of automation have already been achieved using installation and configuration programs and/or scripts. However that type of automation still requires some kind of manual processing, at least the selection and parameterization of these programs, and their execution at the requested point in time. Autonomous resource control systems require all kind of resource management actions in a machine-readable form with defined syntax and semantics. The system creates and operates the SE according to defined rules and activities. The whole process of creation, operation and deletion of the SE must be supported by providing appropriate machine readable task lists, rules for the dynamic allocation and de-allocation of resources, and the SE specific inter-component messaging (events and subscriptions).

The prior art offering creation process normally starts with the creation of an IT - Service Offering. Then, a respective required service environment has to be built and assigned to that IT - Service.

A disadvantage of such a procedure is that all resources of the Service Provider's resource infrastructure which have been already assigned to a respective Service Environments are normally excluded from the creation of a new offering independently whether those resources have free time slots.

### Object of the present invention

Starting from this, the object of the present invention is to avoid the disadvantage of the prior art and to improve the utilization of the Service Provider's infrastructure.

### Brief summary of the invention

The inventive Offering Creation and Validation Component (OCAV) identifies all available resource types contained in the resource catalogue, generates a "GET TIME TABLE" resource management action for each of those resource types, and finally receives a time table containing all resource types with their assigned resources and their assigned free, reserved, and used time slots.

By using that time - table, the OCAV generates a new time - table including all resource types with their assigned resources having a common free time slots. Then, the OCAV component generates a "GET COST" resource management action for each resource type in that new time - table, and assigns the calculated costs to the respective resource types resulting in a final time table.

In further step, the OCAV generates a "mapping" resource management action which maps the free resource included in that final time - table to pre - defined service environments described in the resource catalogue, and if the mapping has been successful, creates a list including all pre - defined service environments including their free time slots and costs. Finally, the OCAV generates an offering for each of those SEs, assigns a price to each Offering which is preferably calculated by certain business rules, and publishes it, preferably in a registry.

A preferred embodiment of the present invention is to use the present invention to dynamically create short - term offerings for pre-defined Service Environments that are specifically configured for short - term offerings. Those Service Environments are indicated by a short - term identifier. Those short - term offerings will be priced with special attractive conditions comparable to last minute travel offerings or Standby tickets in the airline industry.

Examples for such short-term offerings are Web Server environments only needed for special promotion activities, or Bio Grid environments that are usually needed for short-term, heavyweight calculations.

### Brief Description of the several views of the drawings

The above, as well as additional objectives, features and advantages of the present invention will be apparent in the following detailed written description.

The novel features of the invention are set forth in the appended claims. The invention itself, however, as well as a preferred mode of use, further objectives, and advantages thereof, will be best understood by reference to the following detailed description of an illustrative embodiment when read in conjunction with the accompanying drawings, wherein:

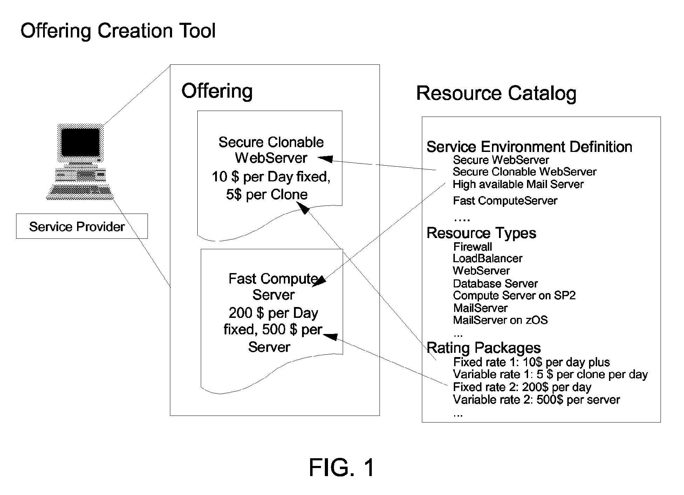

Fig. 1 shows the prior art Offering Creation Tool,
Fig. 2 A shows the inventive Offering Creation and Validation component with its communicating components, e.g. resource catalogue,
Fig. 2 B/C shows specific implementations of the Resource catalog which is preferably used by the present invention
Fig. 3 A shows a floating diagram with the inventive method steps executed by the Offering Creation and Validation component,
Fig. 3 B shows a sample of a time - table in XML which may be used by the present invention,
Fig. 3 C shows a sample of a new time - table in XML including all resource types with their assigned resources having a common free time slots,
Fig. 3 D shows a sample of a final time - table in XML which may be used by the present invention, and
Fig. 3 E shows a sample of the result of the mapping step.

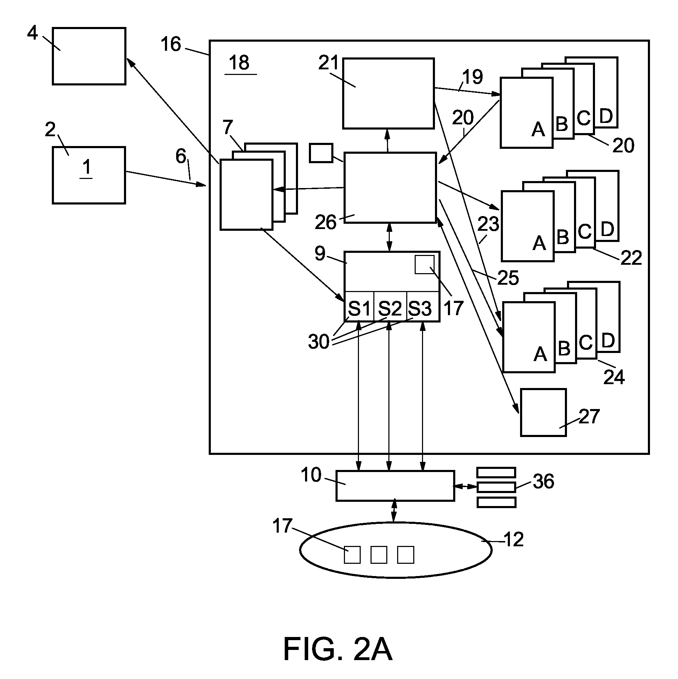

With respect to Fig. 2 A, there is depicted the inventive Offering Creation and Validation component with its communicating function components.

The new and inventive component of the present invention is the Creation and Validation component 26 that is preferably part of the Service Provider's resource infrastructure or pool of resources 12.

The inventive component may be preferably implemented in a client-server architecture in which the Customer 1 uses a Client System 2 with an Operating System like Microsoft Windows, and Internet Browser like Netscape, and the Service Provider 18 uses a Server System 16 like IBM pSeries with an Operating System like IBM AIX, an Application Server like IBM WebSphere Application Server, and a Web server. The Server 16 of the Service Provider 18 has access to a pool of resources 12 like hardware, programs, networks, disks etc via a resource management system 36. The pool of resources 12 may be owned and managed by the service provider 18 himself or the Service Provider 18 uses another Service Provider's pool of resources. The customer 1 preferably communicates with the service provider 18 via communication protocol HTTP/TCPIP.

Contrary to the prior art systems, the inventive OCAV 26 does not require the existence of offerings 7 at all but only requires the existence of already defined service environments (SEs; 30) that are described in the resource catalogue 9. Only when those service environments 30 map to identified free resources 17, then a new offerings 7 for those service environments 30 can be created and published.

The process steps carried out by the inventive OCAV 26 may be briefly summarized as follows:

The inventive OCAV component 26 identifies all available resource types contained in the resource catalogue 9, generates a "GET TIME TABLE" resource management action 19 for each of those resource types, and finally receives a time table 20 containing all resource types with their assigned resources and their assigned free, reserved, and used time slots. By using that time - table 20, the OCAV 26 generates a new time - table 22 including all resource types with their assigned resources having a common free time slots. Then, the OCAV component 26 generates a "GET COST" resource management action 23 for each resource type in that new time - table, and assigns the calculated costs to the respective resource types resulting in a final time table 24.

In further step, the OCAV 26 generates a "mapping" resource management action which maps the free resource included in that final time - table to pre - defined service environments 30 described in the resource catalogue 9, and if the mapping has been successful, creates a list 27 including all pre - defined service environments 30 including their free time slots and costs. Finally, the OCAV 26 generates an offering 7 for each of those SEs 30, assigns a price to each Offering 7 which is preferably calculated by certain business rules, and publishes it, preferably in a registry.

The Resource Catalogue 9 being used by the OCAV 26 provides access to descriptions of all available resource types provided by the pool of resources as well as descriptions of service environments 30 which are either assigned to a certain customer (customer specific service environments) or will be offered to a customer (pre - defined service environment descriptions). Each service environment is described by all resources including references to their assigned resources needed for a specific SE, how to manage those resources in order to fulfill the conditions of that specific SE, how to manage those resources, how to handle situations like resource shortages or resource over-provisioning, and the appropriate assigned resource management actions like configuring or installing of said resources.

In more detail, there are base resource types as well as complex aggregated resource types are described in the resource catalogue.

Base resource types contain references to certain programs (interpretable tasks) which are able to execute the resource management actions (e.g. create/delete) for these resources, interface information for said programs, and additional data necessary to manage the resources by a resource management system.

For example the base resource type "server system" is described by a reference to its resource management actions. These resource management actions are interpretable tasks such as creation and deletion of a resource in machine-readable form. For example such an action may be described by an URL which references a Web Service. The base resource type definitions and the corresponding management actions may be provided by the resource manufacturer or the service provider itself.

Beside these base resource types, the resource catalog contains categorized aggregated resource types, which provide several abstraction levels within the resource catalog. Again, these aggregated resource types may be provided by certain resource manufactures or created by the service provider according to its needs.

An aggregated resource type contains references to one or more other resource types with certain parameters for them or a certain combination of them or both. E.g. an aggregated resource type 'HIGH-SECURE FIREWALL' may reference to the 'STANDARD FIREWALL' with configuration parameter to only open port 80, where 'MEDIUM-SECURE FIREWALL' references the same 'STANDARD FIREWALL' but with configuration parameters to open port 80 AND 1024. An example where multiple resource types are referenced is the aggregated resource type 'SECURE WEBSERVER' which may reference a 'WEBSERVER' resource type and a 'FIREWALL' resource type with their appropriate parameters.

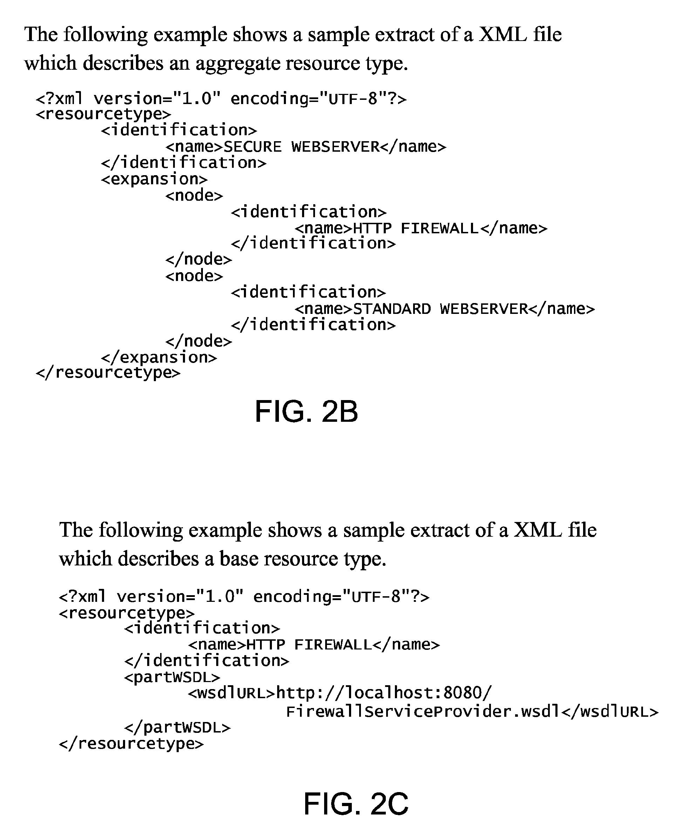

Fig. 2 B and Fig. 2 C show examples of the categorization of resources. The categories are used to build higher abstracted resource. Technical details such as base resource types and their configuration parameters are hidden on the higher abstraction levels and are represented by categorization information (such as 'SECURE' or 'UNSECURE').

The resource catalog may be preferably implemented as a certain table in a database or even just as plain XML file or files. Fig. 2 B shows a sample extract of such a XML file which defines an aggregated resource type "SECURE WEBSERVER", which consists of a HTTP FIREWALL and a STANDARD WEBSERVER. Fig. 2 C shows a sample extract of such a XML file which describes a base resource type "HTTP FIREWALL".

In order to participate of a resource type in the inventive Offering Creation and Validation component 26, the respective resource types with their referenced management actions (e.g. create, delete etc.) need to be extended to manage and provide access to usage information (reserved, free, used time slots) of their assigned resources and the respective cost for each of those resource types.

The existing resource management actions 21 (e.g. delete, create, etc) for resource types are extended to provide access to a time - table 22 including free, used and reserved time slots for all resources.

The time - table 22 can be preferably queried from the respective resource type by the GetTimeTable resource management action 19. This action returns a time - table 22 for all resources of the resource type for a given time frame. A time frame is specified by the parameters startTime and endTime.

The time - table 22 contains entries for each resource of respective resource type. Each resource 17 is represented by an entry in the time - table 22.

Entries are filled time slots whenever a resource
is reserved for a service environment. Reservation is a resource management action that does not involve the resources themselves. It does not necessarily mean that the resource is used within that time frame,
is assigned to a service environment. Assignment of a resource means that the resource is used within the service environment. Unassigned and unreserved resources are marked as free.

The time - table 22 can be implemented as a database table where each row of the table represents a resource and the columns represent free, used and reserved time slots or as an XML file.

Furthermore, the resource management actions for the resource types are extended by a "Get Cost" management action 23 to calculate cost for a resource for a given free time slot.

The cost can be queried from the resource type by the "GET cost" management action 23. This resource management actioneturns cost 25 assigned to a specific resource of a resource type. The result of this "Get cost" management action may have a XML structure.

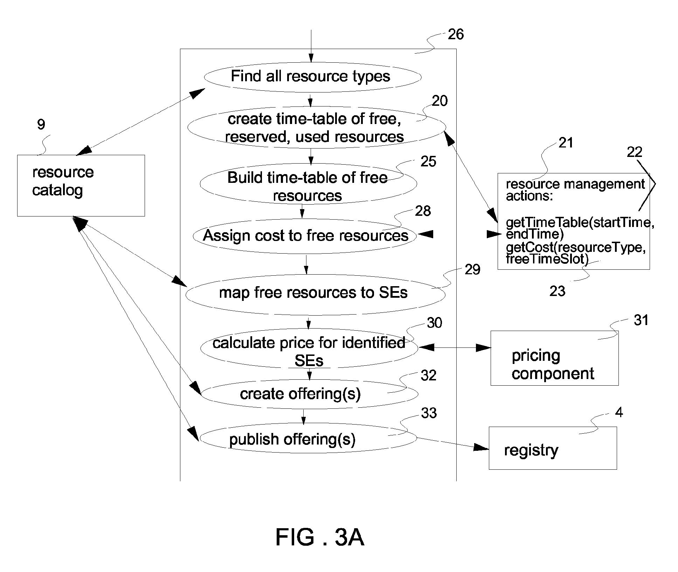

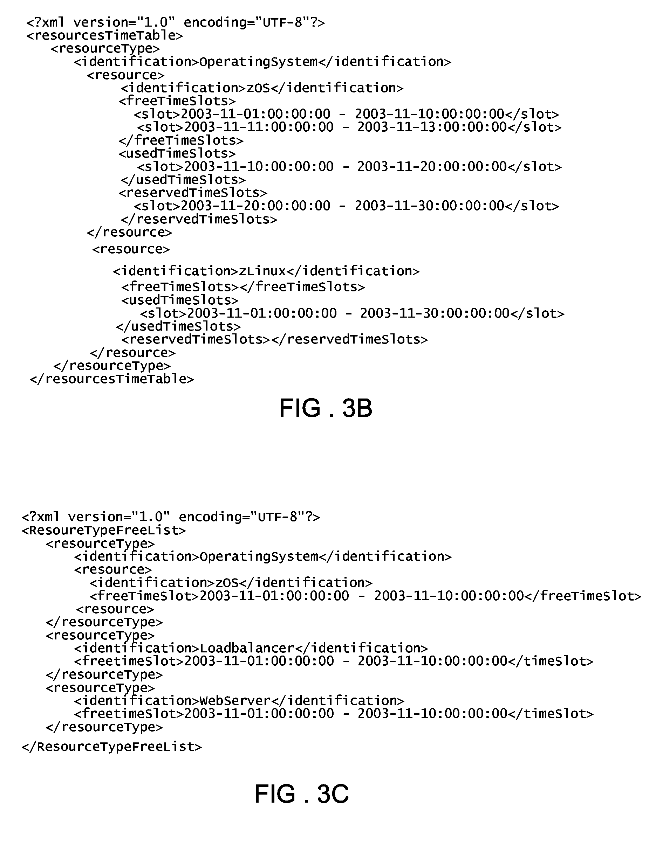

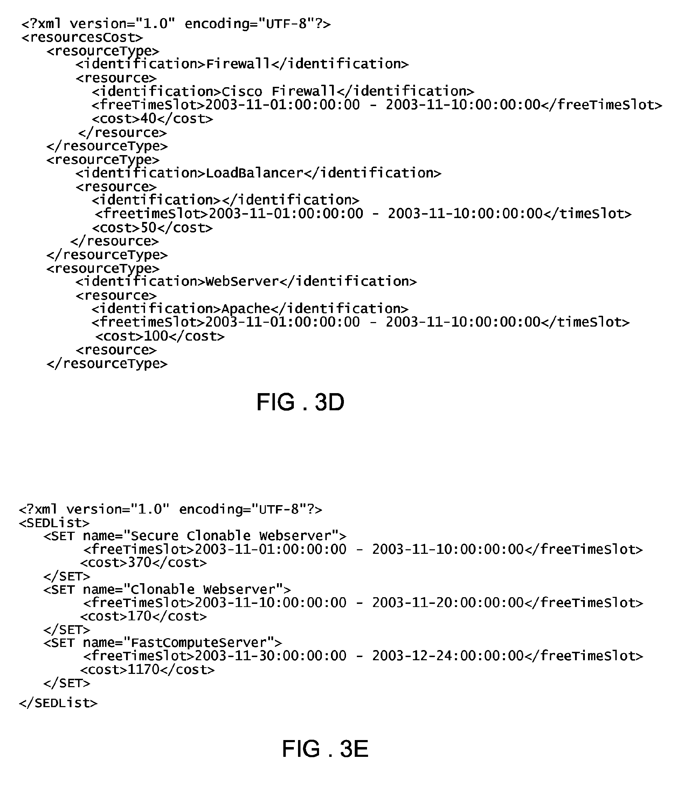

The latter process of creation of an offering based on list including the resource types with their assigned resources, their respective free time slots, and their costs is described in more detail with respect to Fig. 3.

A resource type can assign cost for a resource and a given time frame either statically by returning a fixed cost that has been assigned to a resource type by the provider of the resource type or dynamically by executing a calculation algorithm.

The resource management actions themselves may be included in the Resource Catalogue 9 or may be included in a separate Resource management action Catalogue 21.

These resource management actions 21 which are provided by a resource management actions catalog are a collection of items of interpretable tasks 23'-25' operate the pre-defined Service environment. These tasks may be references to resource specific installation and/or configuration programs 23" - 25" (see Fig. 6 B) or may be just described by the URL pointing to a web service.

Finally as described in the method below, these individual tasks for each resource are combined into a specific Service Environment task. To be machine readable, that composite task may be described using workflow technology, with all the resource specific sub - tasks which are individual activities in the workflow. The workflows itself may be described using e.g. a XML file according to the BPEL (Business Process Execution Language). This workflow description can be deployed into the workflow engine of the Resource Manager and executed as needed,
decision logic which can be implemented in the form of rules deployed into the rules engine of the Resource Manager. For example there may be rules for modeling the service provider business model, i.e. rules defining which customer out of the set of supported customers is the most critical in terms of business value, as this customer will be preferred in case of resource shortage. Another example are rules which define certain limits, and the actions to be taken in case the limits are missed. If these rules are deployed into the rules engine of the Resource Manager can e.g. autonomously react on certain situations and trigger the appropriate actions such as adding or removing resources to or from the customer's specific service environment,
events and subscriptions for events in order to enable communication between the participating resource management actions. This communication is necessary to e.g. propagate any state changes on the resources to the resource control system, so it can act as required. These events are the base for the situation detection and rules evaluation as described above.

The whole creation and operation of the Service Environment can be done by an autonomous Resource Manager which is not part of that invention. In order to meet the Service Environment, the Resource Manager must be configured with Service Environment specific definitions, which are the resource management actions for the specific Service Environment.

The lifetime of a provisioned Service Environment can vary from days over weeks to months depending on the concrete scenario. This creates unused capacity for service providers. The inventive Offering Creation and Validation component is the means to bring unused capacity to consumers.

The present invention may be preferably used on following application areas
- Web Serving Environments, where an extension of the available capacity for special peek loads is required
- Media companies that need extension to streaming capacity for upcoming video streaming events,
- Software Development companies, where Application Development and Testing Departments require test systems such as zLinux images on short term notice,
- BioGrid companies require additional capacity for peek loads during heavyweight calculation processes

A typical scenario for using the present invention may be a web fashion shop.

The shop wants to set up a special advertising and promotion action before Christmas. Therefore it needs an extension to its existing web capacity within a week for the following two weeks at best price. Afterwards this capacity is no longer needed.

With the proposed inventive OCAV component, the capacity planning at the fashion shop may contact the xSP and look for the cheapest offering for the appropriate time frame.

Consider now the xSP who offers unused capacity on short term notice to consumers.

The fashion shop contacts the xSP site, selects an appropriate offering depending on time frame and price and subscribes to it. The xSP provisions the required web capacity for the subscribed time frame.

With respect to Fig. 3, there is depicted a floating diagram with the inventive method steps executed by the Offering Creation and Validation component.

### 1. Method step - build time - table of free time slots for resource types/resources 20

As a first step, the Offering Creation and Validation Component 26 identifies all resource types included in the resource catalog 9. To create a time - table of free, reserved and used time slots of all resources for each resource type 20, the resource management actions 21 for each resource type is invoked. The time - table including free, reserved and used time slots is provided by the getTimeTable resource management action 22.

The Offering Creation and Validation component 26 iterates through the list of base resource types for a time frame defined by the parameters startTime and endTime of the getTimeTable resource management action.

The result of this step is a time - table including all identified resource types, their assigned resources, and their respective reserved, used, and free time slots 20. Fig. 3 B shows a sample extract of a time - table in XML which describes the base resource types, their assigned resources, and their respective reserved, used and free time slots.

As a next step 25, this time - table 20 is to processed to identify the common free time slots of all resources contained in the time - table 20.

As a result a new time - table 25 is created including all resource types and their assigned resources which have a common free time slot.

Fig. 3 C shows a sample extract of a time - table 25 in XML including all resource types and their assigned resources which have a common free time slot.

### 2. Method step - Assign cost to free resources of the existing time - table 28

Next step is to assign costs to the identified free resources 120 in the new time - table 28. This is done by querying the cost for the free resources by invoking the getCost resource management action 23. This action returns costs for all resource types which are preferably included in the new time - table.

As a result, a final time - table is created including all resource types, their assigned resources which have a common free time slot, and their assigned respective costs.

Fig. 3 D shows a sample extract of a final time - table in XML including all resource types, their assigned resources which have a common free time slot, and the respective costs.

### 3. Method step - map free identified resources included in the final time - table to mappable pre-defined service environments 29

Now, the free resources included in the final time - table are mapped to pre-defined SEs by iterating through the final time - table. Preferably, the SEs have an identifier allowing mapping of free resources to that specific SED.

For each SE, each resource type entry of this final time - table is checked against the result generated in the step described above. The mapping could be done by resource type and resource name.

As a result of the mapping step 29, a SE list may be returned including all successful mapped SEs, their free time slots, and their costs.

Fig. 3 E shows a sample extract of a SEDD list in XML.

The cost which is assigned to a mapped SE is usually the sum of the costs for the free resources referenced by the SED.

### 4. Method step: Associate prices to the mapped Services Environments 30

Each of the Service Environments has already a cost assigned. However, the final price calculation depends on the service providers business rules.

That is, in addition to assigning cost to an identified, mappable SE, the Offering Creation and Validation component calculates a price for each mapped SE which is included in the list. It may interact with a separate pricing component 31.

### 5. Method step: creating offerings for all mapped SEs 32

After a price has been assigned to the mapped SEs, the final offering is be generated 32 and then published 33.

The generated offering may be an XML file itself. Then, the offering is then be published 33 to any public, private or semi-public registry 4. In addition, the brokers may be informed about new available offering, e.g. via email.

## Claims

1. Method for dynamically and automatically setup offerings for IT - Services by a Service Provider, wherein each IT - Service to be offered to a customer is described by a Service Environment description (SED), wherein each Service Environment description defines all resource types needed to execute said Service Environment, wherein said Service Environment descriptions as well as descriptions for all resource types available in the Service Provider's resource infrastructure are included in a Resource catalogue, wherein said method comprises the steps of:
identifying all resource types being part of Service Provider's resource infrastructure,
accessing their respective free, reserved and used time slots (20),
identifying all resources types sharing a common free time slot with other resources types (25),
mapping said identified resources types sharing a common time slot to said Service Environments described in the resource catalogue (29), and
creating offerings for said service environments which are successfully mapping to said resources types sharing a common time slot (32).

2. Method according to claim 1, further comprising the step of:
calculating costs for each resource type sharing a common free time slot, and
assigning said cost to said respective resource type (28).

3. Method according to claim 1, further comprising the step of:
calculating the overall cost for each Service Environment which is successfully mapping with said resource types having a common free time slot,
assigning said overall cost to said respective Service Environment.

4. Method according to claim 3, further comprising the steps of:
Calculating a price for each Service Environment by using Service Provider's business rules,
assigning said price to said respective Service Environment (30).

5. Method according to claim 4, further comprising the steps of:
Creating an offering for each Service Environment including said assigned price (32), and
Publishing said offering (33).

6. Method according to claim 1, wherein said Service Environments contains an mapping identifier which allows to use the Service Environment for mapping.

7. Method according to claim 1, wherein said offering is a short-term offering.

8. System for dynamically and automatically setup offerings for IT - Services comprising:
a resource catalog (9) containing descriptions of Service Environments (30) as well as descriptions of resource types belonging to the Service Provider infrastructure including reference information to execute resource management actions for said resource types as well as information about dependencies of said resource types,
an offering creation and validation component (26) providing:
means for identifying all available resource types described in the resource catalogue,
means for accessing a time - table (20) for each of those resource types including all resource types with their assigned resources and their assigned free, reserved, and used time slots,
means for generating a new time - table (22) including all resource types with their assigned resources having a common free time slot,
means for mapping said free resources included in said new time-table to service environments description contained in the resource catalogue (9),
means for creating a list (27) including all service environments with their assigned free time slots, if said free resources included in list are mapping to said Service Environments,
means for creating an offering (7) for each of Service Environment (30) which has been successfully mapped.

9. System according to claim 8, wherein said resource catalogue includes for each resource type a reference to execute a Get time - table management action (19) for receiving a time - table including free, reserved, and used time slots of each resource type, and

10. System according to claim 8, further comprising a means for accessing costs for each resource type and assigning said cost to said respective resource type included in said new time - table.

11. System according to claim 8, wherein said resource catalogue includes for each resource type a reference to execute a Get Cost management action (23) for creating a final time - table including costs for each resource type.

12. System according to claim 8, further comprising a means for calculating costs for said Service Environments which have been successfully mapped, and assigning said cost to said respective Service Environment in said final time - table.

13. System according to claim 8, further comprising means for creating a price for each offering and including said price into said respective offering.

14. System according to claim 8, wherein each Service Environment description includes a mapping identifier allowing mapping of said Service Environments (30).

15. System according to claim 8, wherein said resource catalogue includes for each resource type a reference to execute a mapping management action for mapping said free resources included in said new time - table to service environment descriptions (30) contained in said resource catalogue (9).

16. Computer program product stored in the internal memory of a digital computer, containing parts of software code to execute the method in accordance with claim 1-7 if the product is run on the computer.
